# EUROPÄISCHE PATENTSCHRIFT

(11) **EP 2 280 797 B1**
(45) Veröffentlichungstag und Bekanntmachung des Hinweises auf die Patenterteilung: **16.01.2013**
(21) Anmeldenummer: 09757175.6
(22) Anmeldetag: 19.05.2009
(51) Int. Cl.: B23C 5/10

(54) **SCHAFTFRÄSER**
END MILL CUTTER
FRAISE À QUEUE

(30) Priorität: 30.05.2008 DE 102008025961
(43) Veröffentlichungstag der Anmeldung: 09.02.2011
(73) Patentinhaber: Kennametal Inc., Latrobe, PA 15650-0231 (US)
(72) Erfinder: HOBOHM, Uwe, 90530 Wendelstein (DE)
(74) Vertreter: FDST Patentanwälte
(86) Internationale Anmeldenummer: PCT/EP2009/003531
(87) Internationale Veröffentlichungsnummer: WO 2009/146792

(56) Entgegenhaltungen:
- EP-A- 0 365 218
- WO-A-2005/122690
- WO-A-2006/041353
- DE-B- 1 177 904
- JP-A- 2002 018 627
- US-A- 3 456 316
- "New End MIll" IRON AGE, NEW YORK, NY, US, Bd. 193, Nr. 11, 3. Dezember 1964 (1964-12-03), Seite 166, XP002113840

## Beschreibung

Die Erfindung betrifft einen mehrschneidigen Schaftfräser mit den Merkmalen des Oberbegriffs des Anspruchs 1 sowie ein Verfahren zur Fräsbearbeitung mit einem derartigen Schaftfräser.

Ein derartiger Schaftfräser ist aus der US 3,456,316 zu entnehmen. Bei diesem sind um den Umfang verteilt mehrere Schneiden sowie beabstandet von diesen jeweils eine Führungskante angeordnet, die eine Rattemeigung des Werkzeugs bei der Werkstückbearbeitung reduzieren sollen.

Aus der WO 2005/122690 A2 ist ein Schaftfräser zu entnehmen, bei dem zur Erhöhung der Torsions- und Biegesteifheit in Umfangsrichtung nachfolgend zu einer jeweiligen Schneide eine Verstärkung des Rückens im Sinne einer Materialanhäufung vorgesehen ist. Mit dieser Versteifung soll die Lebensdauer des Werkzeugs erhöht und störende Vibrationen verringert werden.

Bei derartigen Schaftfräsem ist die Anordnung von Leisten aus einem verschleißfesten Werkstoff als Schneidleisten sowie der Einsatz von Schneidplatten an sich bekannt, wie dies beispielsweise aus der JP 2002018627 A oder der WO 2006/041353 A1 zu entnehmen ist.

Derartige Schaftfräser werden üblicherweise als Gegenlauffräser zur Schrupp- und Schlichtbearbeitung von Werkstücken eingesetzt. Die Werkstücke sind für die Bearbeitung nicht immer in Spannfutter von speziellen Werkzeugmaschinen eingespannt. Vielmehr ist es auch üblich, in der Fertigung an speziellen Transport- oder Förderzeugen aufgehängte Werkstücke mit Hilfe derartiger Schaftfräser zu bearbeiten. Beispielsweise ist es üblich bei der Herstellung von Automobilen Achsträger oder ähnliche Baugruppen an einfachen Bügeln aufzuhängen und diese sodann zu bearbeiten.

Infolge der fehlenden stabilen Einspannung in ein Werkstückspannfutter ist das Werkstück nur sehr labil aufgehängt, so dass das im Gegenlauf rotierend eingesetzte Fräswerkzeug beim Fräsen das labil aufgehängte Werkstück in Schwingung versetzt. Dieses Schwingen des Werkstücks zieht unmittelbar einen hohen Verschleiß der Schneiden am Werkzeug nach sich. Die Schneiden können infolge des unregelmäßigen Schwingens der Werkstücke sogar ausbrechen. Eine unbefriedigende Lösung des Problems besteht in der Verwendung von Schaftfräsem mit Schneideinsätzen oder Schneidplatten. Die Verwendung dieser Schneideinsätze oder Schneidplatten erhöht jedoch die Rüstzeiten der Werkzeuge erheblich.

Ausgehend von diesen Nachteilen liegt der Erfindung die Aufgabe zugrunde, einen Schaftfräser hinsichtlich seines Standverhaltens zu verbessern. Diese Aufgabe ist durch die Merkmalskombination des Vorrichtungsanspruchs 1 und des Verfahrensanspruchs 14 in erfinderischer Weise gelöst. Die rückbezogenen Ansprüche beinhalten teilweise vorteilhafte und teilweise für sich selbst erfinderische Weiterbildungen der Erfindung.

Der Grundgedanke der Erfindung besteht in der Anordnung einer Gleitfläche im Bereich einer jeden Freifläche der Fräserschneide des Schaftfräsers. Die einzelnen Fräserschneiden des Schaftfräsers sind über den Umfang des Fräsers verteilt angeordnet. Die Anzahl der Schneiden hängt hierbei vom jeweils verfolgten Bearbeitungsziel ab. Infolge des Angriffs einer jeden Schneide am Werkstück wird das Werkstück in Schwingung versetzt. Die im Bereich der Schneide angeordnete Gleitfläche gerät kurz nach dem Eingriff der Schneide in Berührung mit dem Werkstück, stützt sich am Werkstück ab und dämpft so die ungewollte Schwingbewegung des Werkstücks wieder ab. Die Gleitfläche ist bei der Erfindung somit als Stützfläche wirksam.

Nach der Erfindung ist der in Umfangsrichtung der Schneide benachbarte Bereich in eine Freifläche und die sich an die Freifläche anschließende Stützfläche zweigeteilt. Die Freifläche gewährleistet eine sichere Schnittbewegung der Schneide und die erforderliche Spanabfuhr. Die Freifläche ist folglich auf der einen Seite von der Schneide und auf der anderen Seite von der Stützfläche begrenzt. Die Stützfläche wirkt und dämpft die durch den Schneideneingriff hervorgerufene Schwingung des Werkstücks mehr oder weniger vollständig wieder ab.

Die in einer ersten Alternative des erfindungsmäßigen Schaftfräsers vorgeschlagene Zusammenfassung von Schneide, Freifläche und Stützfläche in ein als Hartmetallstreifen ausgestaltetes Schneidenmodul, welches auf den Grundkörper eines Schaftfräsers aufgelötet werden kann, hat den Vorteil, dass der Fräser-Grundkörper aus einem wärmebeständigen so genannten Warmarbeitsstahl gefertigt werden kann. Der Fräser-Grundkörper kann so hinsichtlich seiner Werkstoffeigenschaften ebenso optimiert werden wie das aufzulötende Schneidenmodul. Geeignete und bevorzugte Werkstoffe für die aufgelöteten Schneidenmodule bzw. Schneidplatten sind Hartmetall, Cermet, Keramik, Kubischer Bornitrid (CBN) oder Poly-Kristalliner-Diamant (PKD).

In einer zweiten Alternative ist es möglich, die beschriebenen Elemente, nämlich Schneide, Freifläche und Stützfläche, auf einem Schneideinsatz oder einer Schneidplatte, insbesondere einer Wendeschneidplatte anzuordnen, um die mit der Verwendung derartiger Schneidplatten verbundenen Vorteile für die Erfindung ebenfalls zu nutzen.

In vorteilhafter Ausgestaltung ist die Stützfläche poliert. In weiterer Ausgestaltung ist die Stützfläche mit PVD-Dünnschichten beschichtet. All diese Maßnahmen dienen zur Verhinderung von Materialansammlungen, insbesondere von Materialaufklebungen oder Reib-Verschweißungen. Mit Hilfe dieser Maßnahmen ist sichergestellt, dass die Stützfläche über ihre Stützfunktion hinaus keine unerwünschten Nebenerscheinungen auf das Werkstück ausübt.

In vorteilhafter Ausgestaltung ist der Bereich des Fräseraußendurchmessers im Bereich der Stützfläche geringfügig kleiner als im Bereich der Fräserschneide. Diese Ausgestaltung begünstigt einen guten Rundlauf des Schaftfräsers und verhindert ein Verkanten des Schaftfräsers am Werkstück. Dieses gute Rundlaufverhalten des Schaftfräsers wird weiter begünstigt durch einen in weiterer Ausgestaltung vorgesehenen rundgeschliffenen Auslauf der Stützfläche.

Zur Stabilisierung der Schneide und zur Erhöhung der Standzeit der Schneide ist es weiterhin vorgesehen, die Schneidenecke zu verrunden. Weiterhin ist es vorteilhaft, der Schneide eine Schneidenfase zuzuordnen. Sowohl die erwähnte Kantenverrundung als auch die Schneidenfase dienen dem Schutz der Schneide. Insbesondere bei Werkstücken, die tendenziell - wie die hier in Rede stehenden, hängenden Werkstücke - zum Aufschaukeln neigen, ist ein derartiger Schutz der Schneide vorteilhaft.

Zur Stabilisierung des Rundlaufverhaltens des Werkzeugs und zur Vermeidung periodischer Schwingungen am Werkstück sind die Schneiden über den Umfang des Schaftfräsers in einer ungleichen Teilung zueinander angeordnet.

Zur Verbesserung des Schnittergebnisses und zur Erzielung kurzer Späne sind die Schneiden in Axialrichtung zueinander so versetzt angeordnet, dass sie einander überschneiden.

In einer weiteren vorteilhaften Ausgestaltung sind die Schneidenmodule in mehrere Schneidensegmente aufgeteilt. Hierfür weist jedes Schneidenmodul quer zur Mittellängsachse des Schaftfräsers verlaufende Spanteilemuten auf. Die Spanteilemuten bilden zwischen sich jeweils die Schneidensegmente. In vorteilhafter Ausgestaltung sind die Spanteilemuten so angeordnet, dass sie analog den Schneiden in Axialrichtung versetzt zueinander angeordnet sind, um ihrerseits einen guten Spanbruch und damit das Entstehen kurzer Späne zu gewährleisten.

Der erfindungsmäßige Fräser erlaubt in vorteilhafter Weise die Anwendung eines Gleichlauffräsverfahrens. Üblicherweise wird bei labil aufgespannten Werkstücken das Gegenlauffräsverfahren angewandt. Hier wird das Werkstück während der Bearbeitung vom Fräswerkzeug weggedrückt. Infolge der Gegenlaufbewegung neigt das Werkstück zum Aufschwingen und Rattern. Nach dem Stand der Technik erschien es jedoch nicht möglich, labil aufgespannte Werkstücke mit einem Gleichlauffräsverfahren zu bearbeiten, da hierfür ein spielfreies Bearbeiten im Bereich der Wirkstelle erforderlich ist, weil andernfalls die Gefahr des Werkzeugbruchs besteht.

Bei der Verwendung des erfindungsmäßigen Schaftfräsers für ein Gleichlaufverfahren wird zunächst die Tatsache genutzt, dass der Gleichlauffräser dazu neigt, das zu bearbeitende Werkstück gewissermaßen an den Fräser heranzuziehen. Nachdem die Fräserschneide das Werkstück an den Schaftfräser beim Schneiden heranzieht, kommt die Stützfläche mit dem Werkstück in Eingriff und stützt so den Schaftfräser gegenüber dem Werkstück ab, so dass ein Aufschwingen des Werkstücks wirksam verhindert ist Die Kombination der von der Fräserschneide auf das Werkstück ausgeübten Zugbewegung einerseits und der Abstützwirkung der Stützfläche andererseits bewirkt die für das Gleichlauffräsen erforderlich spielfreie Bearbeitung an der Wirkstelle.

Der Schaftfräser führt zur Bearbeitung seitlich an die zu bearbeitende Fläche des Werkstücks heran und wird parallel bzw. gleichebig an dieser Fläche entlanggeführt. Die zu bearbeitende Fläche des Werkstücks wird bei der Bearbeitung aufgrund der gleichlaufenden Rotationsbewegung des Schaftfräsers zur Axialbewegung des Werkstücks gleichsam an den Schaftfräser herangezogen. Durch dieses Heranziehen des Werkstücks an das Werkzeug werden die Schnittbedingungen für die einzelnen Fräserschneiden begünstigt. Die infolge des Heranziehens des Werkstücks auf den Schaftfräser seitlich einwirkenden Kräfte und die dadurch hervorgerufenen Schwingungen werden durch die erfindungsmäßige Stützfläche kompensiert. Mit Hilfe der erfindungsmäßigen Werkzeuge ist es möglich, die Werkzeugstandzeiten um den Faktor 3 bis 4 zu erhöhen.

Anhand eines Ausführungsbeispiels ist die Erfindung näher erläutert. Die einzelnen Zeichnungsfiguren zeigen:
- Fig. 1: eine Seitenansicht des erfindungsmäßigen Schaftfräsers mit Schneidenmodulen,
- Fig. 2: die Vorderansicht des in Fig. 1 dargestellten Schaftfräsers gemäß Pfeil II in Fig. 1,
- Fig. 3a: eine Detailzeichnung des Schneidbereichs der Schneidenmodule mit eingeformten Spanteilemuten einer ersten Schneide,
- Fig. 3b: die Ausgestaltung und Lage des Schneidenmoduls der zur ersten Schneide gemäß Fig. 3a versetzt angeordneten nächsten Schneide am Schaftfräser,
- Fig. 3c: den Schnitt c-c in Fig 3a,

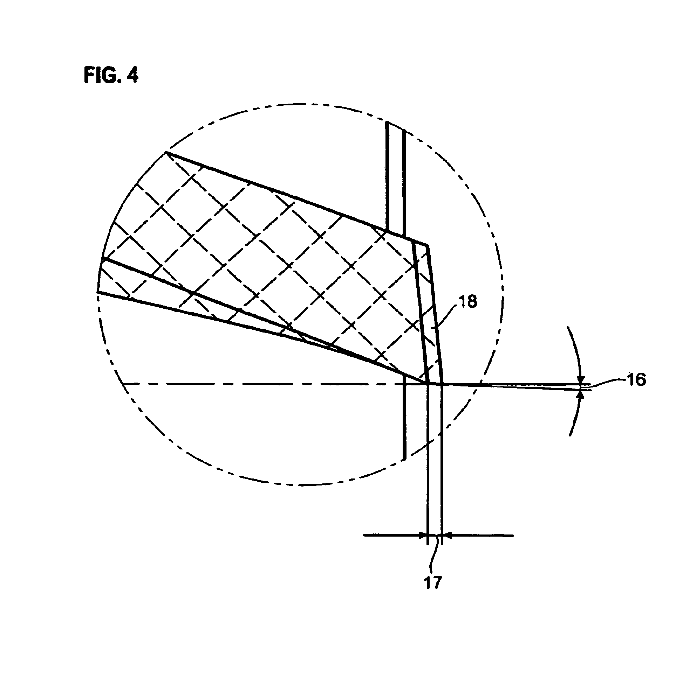

- Fig. 4: das Detail IV in Fig. 1,

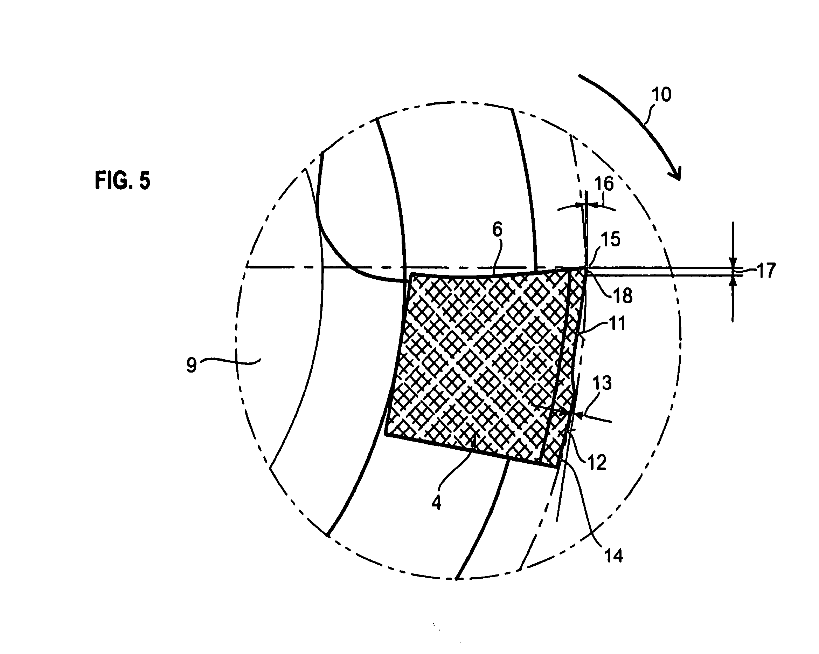

- Fig. 5: das Detail V in Fig. 2,
- Fig. 6: eine Seitenansicht eines erfindungsmäßigen Schaftfräsers mit in Plattensitze eingeschraubten Hartmetallwendeplatten, und
- Fig. 7: den Schnitt VIII-VIII in Fig. 6

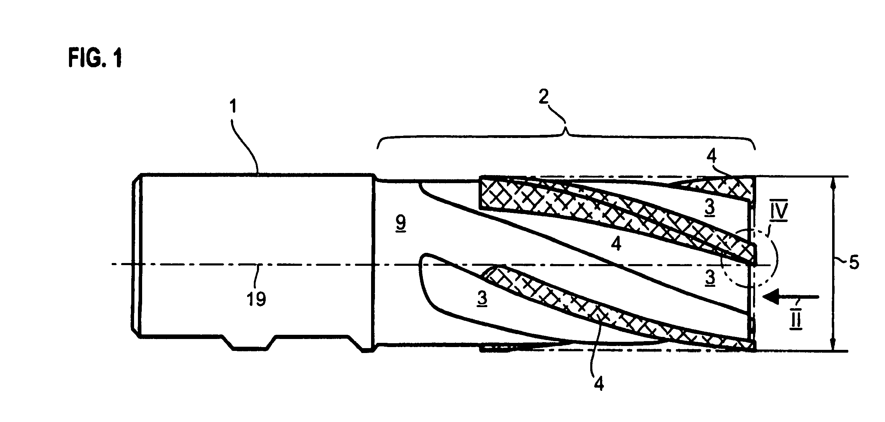

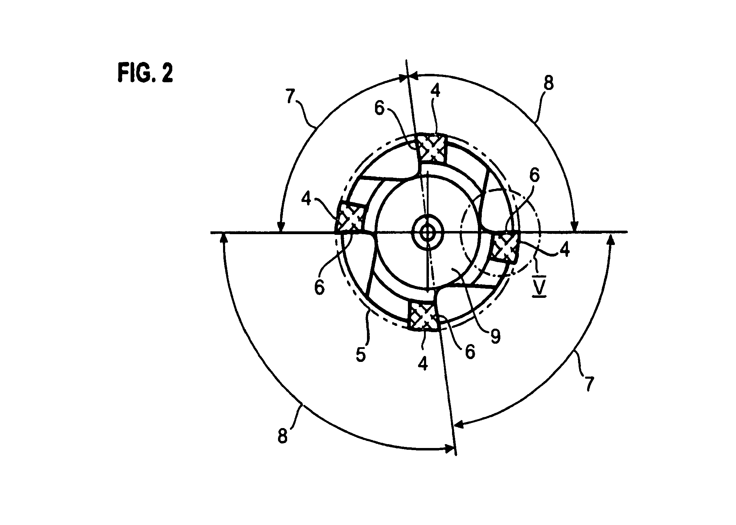

Der in Fig. 1 in Seitenansicht dargestellte Schaftfräser besteht aus einem Spannschaft 1 zum Spannen in einem Werkzeugspannfutter und einem Fräserbereich 2. Im Fräserbereich 2 erkennbar sind die gewendelten Spannuten 3 und die aufgelöteten Schneidenmodule 4. Des Weiteren ist erkennbar der Fräseraußendurchmesser 5 im Bereich der Schneide 6. Aus der Draufsicht der Fig. 2 ist ersichtlich, dass der im Ausführungsbeispiel dargestellte Fräser ein vierschneidiger Schaftfräser mit vier Schneidenmodulen 4 ist. Die Teilung der Schneidenmodule 4 und damit der Schneiden 6 zueinander ist ungleich. Es wechseln jeweils ein kleiner Teilungswinkel 7 und ein großer Teilungswinkel 8 miteinander ab. Der kleine Teilungswinkel 7 beträgt im Ausführungsbeispiel jeweils 83°, während der große Teilungswinkel 8 jeweils 97° beträgt.

Die Schneidenmodule 4, die im Ausführungsbeispiel aufgelötete Hartmetallstreifen sind, sind auf einen Grundkörper 9 aus Warmarbeitsstahl aufgelötet. An die Schneide 6 schließt sich in Umfangsrichtung 10 die Freifläche 11 an. An die Freifläche 11 grenzt in Umfangsrichtung 10 die Stützfläche 12.

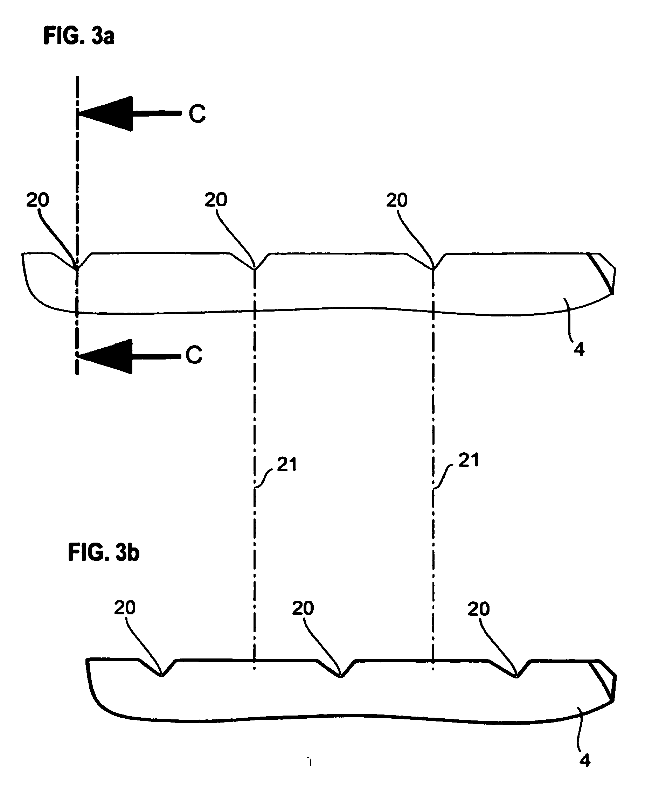

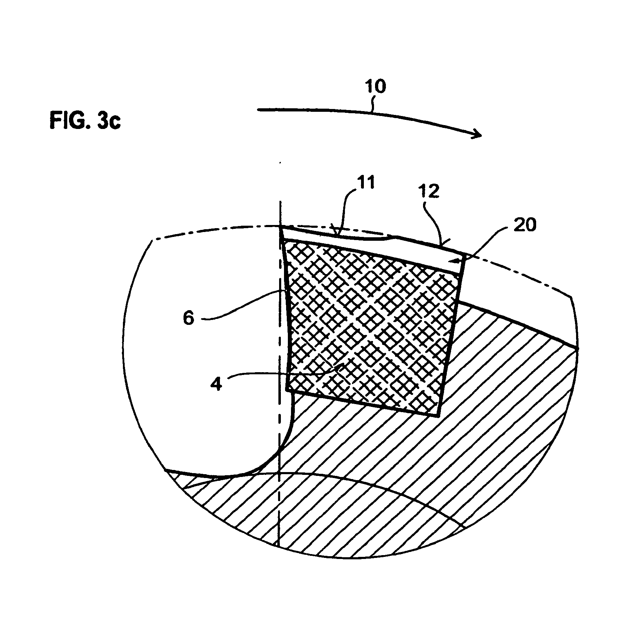

Fig. 3a zeigt einen Ausschnitt eines Schneidenmoduls 4. In dieses Schneidenmodul 4 sind drei in gleichen Abständen nebeneinander angeordnete Spanteilemuten 20 eingeformt. Diese Spanteilemuten 20 verlaufen quer zur Mittellängsachse 19 des Schaftfräsers. Die unterhalb der Fig. 3a angeordnete Fig. 3b zeigt das Schneidenmodul 4 der entsprechenden benachbarten Schneide. Die Hilfslinien 21 zeigen dabei, dass die Spanteilemuten 20 der benachbarten Schneidenmodule 4 gleichsam "auf Lücke", also in Mittellängsrichtung 19 des Schaftfräsers versetzt zueinander angeordnet sind. Die Ungleichteilung infolge der sich abwechselnden kleinen Teilungswinkel 7 und großen Teilungswinkel 8 hat zur Folge, dass die versetzt zueinander stehenden Spanteilemuten 20 kurzbrechende Späne beim Fräsen erzeugen.

Der Fräseraußendurchmesser 5 ist im Bereich der Stützfläche 12 um die Durchmesserdifferenz 13 kleiner als im Bereich der Schneide 6. Die Durchmesserdifferenz 13 beim Ausführungsbeispiel beträgt 0,04 mm. Der Fräseraußendurchmesser 5 des Schaftfräsers ist also im Bereich der Stützfläche 12 0,04 mm unter Nennmaß. Schließlich ist das Stützflächenende 14 der Stützfläche 12 auslaufend rund geschliffen zur Ausbildung eines Freiwinkels am Stützflächenende 14.

Die Schneide 6 weist im Bereich ihrer Schneidenecke 15 eine Kantenverrundung auf. Diese Kantenverrundung weist beim Ausführungsbeispiel einen Kantenverrundungsradius 16 von 0,01 mm bis 0,02 mm auf. Des Weiteren weist die Schneide 6 einen Schneidenfase 18 mit einer Schneidenfasenbreite 17 von 0,15 mm auf. Weiterhin ist der im Ausführungsbeispiel gezeigte Schaftfräser mit einer Dünnschicht-Beschichtung versehen. Diese Beschichtung liegt im Bereich von 0,5 bis 0,8 µm. Die Beschichtung erhöht die Verschleißfestigkeit des Schaftfräsers signifikant.

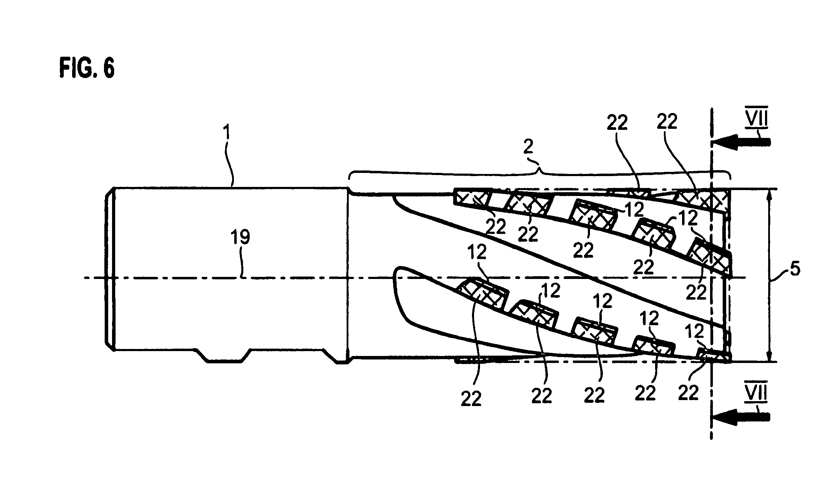

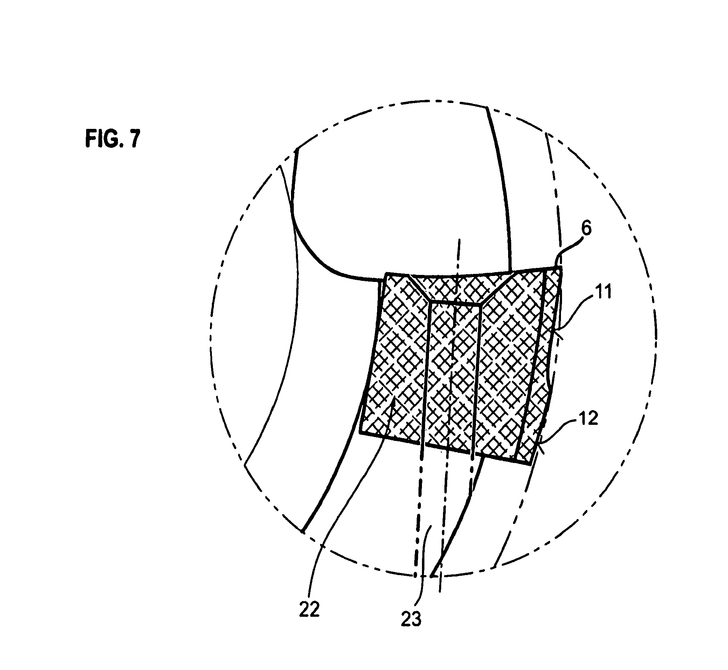

Das zweite Ausführungsbeispiel des erfindungsmäßigen Schaftfräsers gemäß Fig. 6 und Fig. 7 weist wiederum einen Spannschaft 1 und einen in Richtung der Mittellängsachse 19 des Schaftfräsers dem Spannschaft 1 benachbarten Fräserbereich 2 auf. Als Schneidkörper sind bei dieser Ausführungsform Wendeplatten 22 in entsprechenden Plattensitzen am Schaftfräser fixiert. Die HartmetallWendeplatten 22 sind mit Befestigungsschrauben 23 in ihren Plattensitzen gehalten. Die Befestigungsschrauben 23 werden einfach durch die Wendeplatten 22 hindurch in die Plattensitze eingeschraubt. Jede der Wendeplatten weist wiederum eine Schneide 6, einer der Schneide 6 anschließende Freifläche 11 und sich eine wiederum an die Freifläche 11 anschließende Stützfläche 12 auf. Die Stützfläche 12 ist im Ausführungsbeispiel mit DCHP beschichtet. Die Anzahl der verwendeten Wendeplatten 22 ist abhängig vom Durchmesser des Fräsers. Mit Hilfe der Verwendung der Wendeplatten 22 kann der Fräseraußendurchmesser 5 variabel gestaltet sein.

Die Wirkungsweise des Schaftfräsers ist folgende: Zunächst gerät eine der Schneiden 6 mit dem Werkstück in Eingriff. Vom Werkstück wird ein in den Zeichnungen nicht dargestellter Span abgespant und gleitet über die Freifläche 11 ab in die benachbarte Spannut 3 hinein. Das Werkstück wird beim Gleichlauffräsen herangezogen und stützt sich an der Stützfläche 12 ab, so dass die einzelnen Stützflächen 12 das Werkstück nach Art von Führungsleisten stützen, um so zu verhindern, dass das Werkstück in Schwingung gerät.

## Patentansprüche

1. Schaftfräser mit mehreren über den Fräserumfang verteilt angeordneten Schneiden (6) und einer sich in Umfangsrichtung (10) an die jeweilige Schneide (6) anschließenden Freiflläche (11),
**gekennzeichnet durch**
eine auf der der Schneide (6) in Umfangsrichtung (10) abgewandten Seite an die Freifläche (11) angrenzende Stützfläche (12), wobei die Schneiden (6), die sich daran anschließenden Freiflächen (11) und die Stützflächen (12) jeweils Bestandteil eines Hartmetallstreifens sind und dass ein oder mehrere Hartmetallstreifen nach Art von Schneidenmodulen (4) auf Schneidenbereiche am Grundkörper (9) des Schaftfräsers aufgelötet sind, oder
die Schneiden (6), die sich daran anschließenden Freiflächen (11) und die Stützflächen (12) jeweils Bestandteil von Wendeschneidplatten sind, die in die Schneidenbereiche eines Fräsergrundkörpers (9) eingesetzt sind.

2. Schaftfräser nach Anspruch 1,
**gekennzeichnet durch**
eine Beschichtung der Stützfläche (12), vorzugsweise eine aus PVD-Dünnschichten bestehende Beschichtung.

3. Schaftfräser nach Anspruch 1 oder 2,
**gekennzeichnet durch**
einen gegenüber dem Fräseraußendurchmesser (5) im Bereich der Schneide (6) reduzierten Fräseraußendurchmesser (5) im Bereich der Stützfläche (12).

4. Schaftfräser nach Anspruch 3,
**gekennzeichnet durch**
einen rundgeschliffenen Auslauf der Stützfläche (12) auf der der Freifläche (11) abgewandten Seite der Stützfläche (12) zur Bildung eines anschließenden Freigangs.

5. Schaftfräser nach einem der Ansprüche 1 bis 4,
**gekennzeichnet durch**
eine verrundete Schneidenecke (15).

6. Schaftfräser nach einem der Ansprüche 1 bis 5,
**gekennzeichnet durch**
eine von einer Schneidenfase (18) stabilisierte positive Schneide (6).

7. Schaftfräser nach einem der Ansprüche 1 bis 6,
**gekennzeichnet durch**
eine ungleiche Teilung der Schneiden (6) zueinander.

8. Schaftfräser nach einem der Ansprüche 1 bis 7,
**gekennzeichnet durch**
einen Versatz der Schneiden (6) in Axialrichtung derart, dass die einzelnen Schneiden (6) einander überschneidend angeordnet sind.

9. Schaftfräser nach einem der vorhergehenden Ansprüche ,
**gekennzeichnet durch**
quer zur Mittellängsachse (19) des Schaftfräsers verlaufende, das jeweilige Schneidenmodul (4) in Schneidensegmente aufteilende Spanteilernuten (20).

10. Schaftfräser nach einem der Ansprüche 1 bis 9,
**dadurch gekennzeichnet dass** der Fräser ein Gleichlauffräser ist.

11. Schaftfräser nach einem der Ansprüche 1 bis 10,
**gekennzeichnet durch**
Vollhartmetall als Werkstoff.

12. Verfahren zur Fräsbearbeitung, insbesondere Schruppbearbeitung eines Werkstücks,
**gekennzeichnet durch**
einen zum Werkstück gleichlaufend sich bewegenden Schaftfräser nach einem der Ansprüche 1 bis 11.

## Claims

1. End mill cutter having a plurality of cutting edges (6) distributed over the cutter circumference and a flank (11) adjoining the respective cutting edge (6) in the circumferential direction (10),
**characterized by**
a supporting surface (12) adjoining the flank (11) on that side which faces away from the cutting edge (6) in the circumferential direction (10), where the cutting edges (6), the flanks (11) adjoining said cutting edges (6), and the supporting surfaces (12) are in each case an integral part of a carbide strip, and where one or more carbide strips are brazed like cutting edge modules (4) onto cutting edge regions on the parent body (9) of the end mill cutter, or
the cutting edges (6), the flanks (11) adjoining said cutting edges (6), and the supporting surfaces (12) are in each case an integral part of indexable inserts which are inserted into the cutting edge regions of a cutter parent body (9).

2. End mill cutter according to Claim 1,
**characterized by**
a coating on the supporting surface (12), preferably a coating consisting of PVD thin films.

3. End mill cutter according to Claim 1 or 2,
**characterized by**
a cutter outside diameter (5) in the region of the supporting surface (12) that is reduced relative to the cutter outside diameter (5) in the region of the cutting edge (6).

4. End mill cutter according to Claim 3,
**characterized by**
a cylindrically ground run-out of the supporting surface (12), on that side of the supporting surface (12) which faces away from the flank (11), for forming an adjoining clearance.

5. End mill cutter according to one of Claims 1 to 4,
**characterized by**
a rounded cutting edge corner (15).

6. End mill cutter according to one of Claims 1 to 5,
**characterized by**
a positive cutting edge (6) stabilized by a cutting edge bevel (18).

7. End mill cutter according to one of Claims 1 to 6,
**characterized by**
an unequal pitch of the cutting edges (6) relative to one another.

8. End mill cutter according to one of Claims 1 to 7,
**characterized by**
an offset of the cutting edges (6) in the axial direction in such a way that the individual cutting edges (6) overlap one another.

9. End mill cutter according to one of the preceding claims,
**characterized by**
chip breaker grooves (20) which run transversely to the center longitudinal axis (19) of the end mill cutter and divide the respective cutting edge module (4) into cutting edge segments.

10. End mill cutter according to one of Claims 1 to 9,
**characterized**
**in that** the cutter is a climb-milling cutter.

11. End mill cutter according to one of Claims 1 to 10,
**characterized by**
a solid carbide as material.

12. Method for milling, in particular for rough machining, a workpiece,
**characterized by**
an end mill cutter according to one of Claims 1 to 11 which moves in synchronism with the workpiece.

## Revendications

1. Fraise à queue comprenant plusieurs arêtes de coupe (6) disposées de manière répartie sur la périphérie de la fraise et une surface libre (11) se raccordant, dans la direction périphérique (10), à l'arête de coupe (6) respective,
**caractérisée par**
une surface de support (12) supportée sur la surface libre (11) du côté opposé à l'arête de coupe (6) dans la direction périphérique (10), les arêtes de coupe (6), les surfaces libres (11) s'y raccordant et les surfaces de support (12) faisant partie à chaque fois d'un ruban de métal dur et un ou plusieurs rubans de métal dur étant brasés à la manière de modules de coupe (4) sur des régions de coupe au niveau du corps de base (9) de la fraise à queue, ou
les arêtes de coupe (6), les surfaces libres (11) s'y raccordant et les surfaces de support (12) faisant partie à chaque fois de plaquettes de coupe réversibles qui sont insérées dans les régions de coupe d'un corps de base (9) de la fraise.

2. Fraise à queue selon la revendication 1,
**caractérisée par**
un revêtement de la surface de support (12), de préférence un revêtement constitué de couches minces par PVD (dépôt physique en phase vapeur).

3. Fraise à queue selon la revendication 1 ou 2,
**caractérisée par**
un diamètre extérieur de fraise (5) dans la région de la surface de support (12) qui est réduit par rapport au diamètre extérieur de fraise (5) dans la région de l'arête de coupe (6).

4. Fraise à queue selon la revendication 3,
**caractérisée par**
une transition arrondie par meulage de la surface de support (12) sur le côté de la surface de support (12) opposé à la surface libre (11) pour former un espace libre s'y raccordant.

5. Fraise à queue selon l'une quelconque des revendications 1 à 4,
**caractérisée par**
un coin de l'arête de coupe (15) arrondi.

6. Fraise à queue selon l'une quelconque des revendications 1 à 5,
**caractérisée par**
une arête de coupe (6) positive stabilisée par un biseau de coupe (18).

7. Fraise à queue selon l'une quelconque des revendications 1 à 6,
**caractérisée par**
une division inégale des arêtes de coupe (6) les unes par rapport aux autres.

8. Fraise à queue selon l'une quelconque des revendications 1 à 7,
**caractérisée par**
un décalage des arêtes de coupe (6) dans la direction axiale de telle sorte que les arêtes de coupe individuelles (6) soient disposées de manière à s'entrecroiser.

9. Fraise à queue selon l'une quelconque des revendications précédentes,
**caractérisée par**
des rainures de division pour enlèvement de copeaux (20) s'étendant transversalement à l'axe médian longitudinal (19) de la fraise à queue, divisant le module de coupe respectif (4) en segments de coupe.

10. Fraise à queue selon l'une quelconque des revendications 1 à 9,
**caractérisée en ce que**
la fraise est une fraise à fraisage en avalant.

11. Fraise à queue selon l'une quelconque des revendications 1 à 10,
**caractérisée par**
un métal dur massif en tant que matériau.

12. Procédé de fraisage, notamment usinage de dégrossissage d'une pièce,
**caractérisé par**
une fraise à queue selon l'une quelconque des revendications 1 à 11, se déplaçant en avalant vers la pièce.
